# EUROPEAN PATENT APPLICATION

(11) **EP 1 195 698 A1**
(43) Date of publication of application: **10.04.2002**
(21) Application number: 01420194.1
(22) Date of filing: 12.09.2001
(51) Int. Cl.: G06F 17/30

(54) **A process for supplying a web site designer or web site host type customer with a tool for transforming an image from a first format into a second format**

(30) Priority: 28.09.2000 FR 0012330
(71) Applicant: EASTMAN KODAK COMPANY, Rochester, New York 14650 (US)
(72) Inventor: Masera, Eric, Kodak Industrie, 71102 Chalon Sur Saone Cedex (FR)
(74) Representative: Parent, Yves

(57) **Abstract**

The present invention relates to a process to supply a WEB site designer or WEB site host type customer with a tool (10) for transforming an image from a first format into a second format to transform the images (20) present on their site and stored in a unique format, into a second format suited to the display screen of a site user's terminal (30).

## Description

The present invention relates to a tool for transforming an image 10 from a first format into a second format, and more particularly to a process to supply such a tool to a WEB site designer or WEB site host type customer.

The WEB is currently accessible through many types of apparatus such as for instance a PC or again a mobile telephone. The various sites accessible on the WEB comprise display information that is of a multimedia type, i.e. images, text and sound. The various existing apparatuses for accessing these sites have very varied technical capacities in terms of memory and display. Thus, the types of file and the size of images displayable on the apparatuses vary according to their capacities. WEB site designers or again WEB site hosts have to plan for different types of format and image size in their site if they want all users to be able to view their site with any type of apparatus.

The object of the invention is to provide a process that aims to supply a WEB site designer or WEB site host type customer with a tool enabling them only to need a single format and a single image size for their site images while enabling the site users to view them from any viewing apparatus.

The invention relates to a process to supply a WEB site designer or WEB site host type customer with a tool for transforming an image from a first format to a second format to transform the images present on their site and stored in a unique format, into a second format suited to the display screen of a site user's terminal. The process comprises the following steps:
- from a request coming from a user of the customer's site, in which the user requests to view, on his/her terminal, a page of the site in which is found at least one image, to identify the address at which the customer has stored the image in the unique format;
- to recover the image from the identified address;
- to determine the image format suited to the user's terminal on which the image is to be displayed;
- to apply a transformation to the recovered image so as to transform it into the set format;
- to reconstitute and transmit the image, transformed into the set format, to the user.

Other characteristics will appear on reading the description that follows, making reference to the drawings wherein:
- Figure 1 represents the process according to the invention;
- Figure 2 represents a first embodiment of the process according to the invention;
- Figure 3 represents a second embodiment;
- Figure 4 represents a third embodiment; and
- Figure 5 represents a particular embodiment of the invention.

In the description that follows, the terms defined in the manner below will be used. By "image format", is meant the size of images as well as their file type. By "customer" is meant a WEB type site designer or again the host of such a site. By "user" is meant a person viewing a WEB type site.

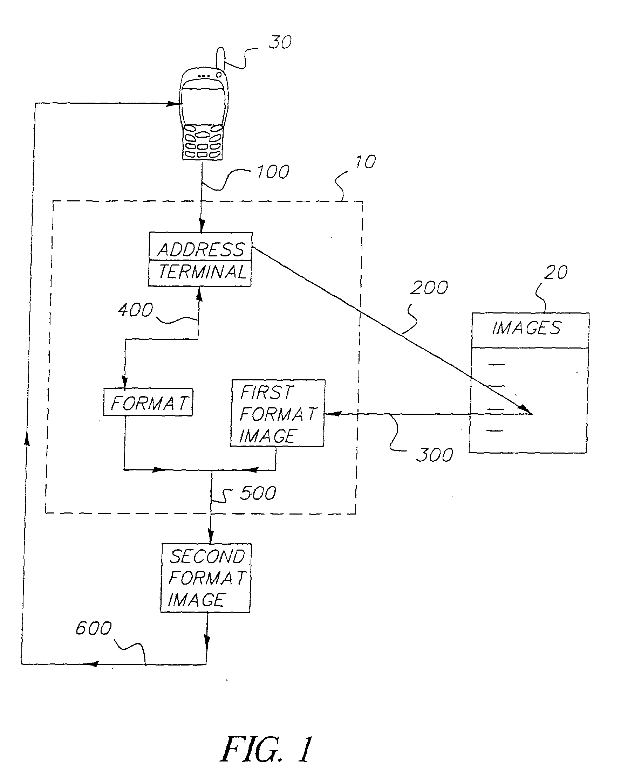

The process of the invention illustrated in Figure 1, provides that each customer stores the images 20 of its site on a server that can be managed by itself or by a third party. According to the invention, the customer stores each of its images 20 in a unique format. Preferably, the chosen format must contain sufficient information to enable a later conversion. The format will contain especially information relating to the definition of the image, the size of the image, or again the color.

When a site user wants to view on his/her terminal 30 a page in which is found at least one image, a request 100 is emitted in which the terminal 30 used is identified as well as the image(s) of the site page that the customer wants to view. For each image, one http type request, or again transformed into http by a gateway, is made on a program that states 200 the URL address defined on the server in which it has been stored. Then the program recovers 300 the image at the URL address given.

Then the image format suited to the user's terminal 30 on which the image is to be displayed is determined 400.

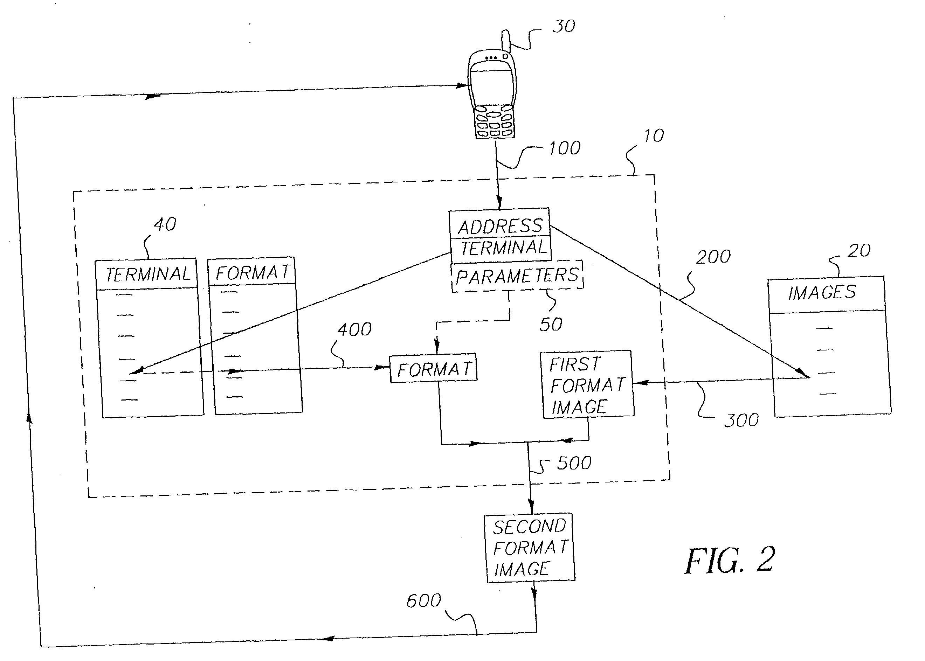

For this purpose, according to a first embodiment illustrated in Figure 2, it is planned to manage a database 40 comprising a list of different types of terminals with display screen. The different types of terminals are for example a personal computer, a mobile phone equipped with a display screen, a PDA, or any other type of apparatus by means of which a WEB type site can be viewed. The database 40 also comprises the format(s) of images that can be displayed on each type of terminal listed in the database. For instance, it is planned that the management of this database consists in manually adding every new type of terminal appearing on the market as well as the image format(s) displayable on it. It can also be planned for this database to be manually updated following when a request has not enabled recognition of the terminal used. According to this first embodiment, the image format suited to the user's terminal 30 on which the image is to be displayed is determined 400 from the database 40.

According to a variant of this embodiment, the formatting parameters 50 of the image linked to the output format can be detailed in the request 100 coming from the terminal, for instance when the user's terminal is capable of displaying images of different formats. These parameters relate to, for instance, the image height or width. If no formatting parameter 50 is stated, default parameters are used.

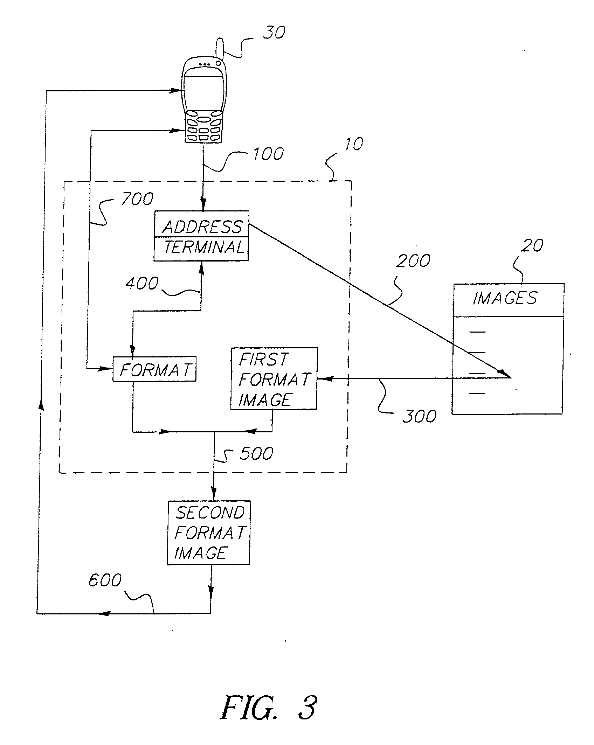

According to a second embodiment illustrated in Figure 3, it is planned to transmit a request 700 to the user's terminal to request the terminal's display capacities. The image format suited to the terminal is determined according to the identified capacities.

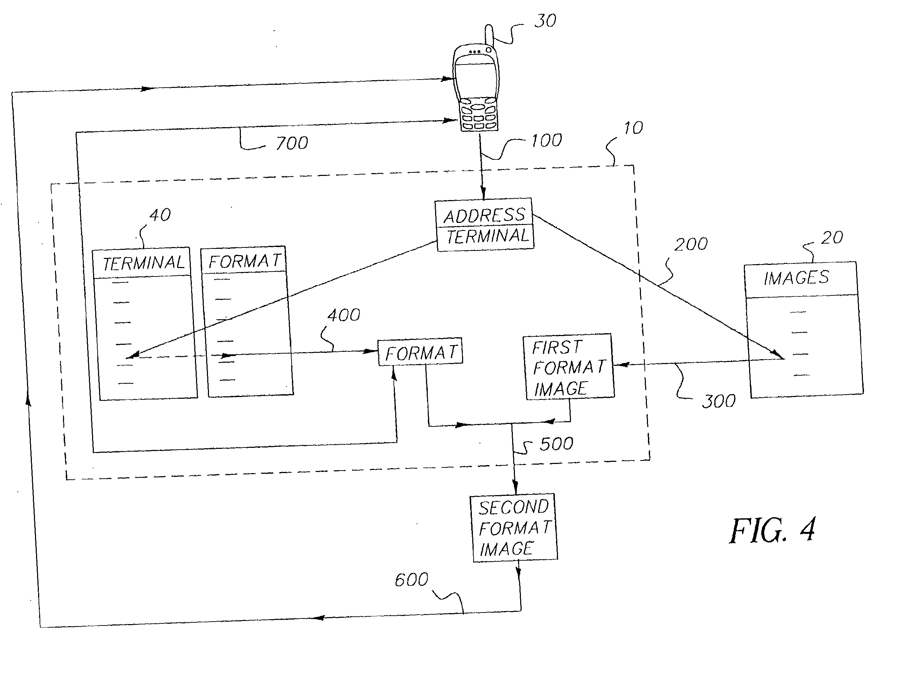

According to a third embodiment represented in Figure 4, it is planned to determine the image format suited to the terminal according both to the database 40 and the terminal display capacities identified following the request 700 to the terminal.

Then a conversion program transforms 500 the image into the set format, for example JPEG or again WBMP when the identified terminal is a cell phone and the viewing application is a Browser Wap 1.1 type.

For instance, when a request comes from a cell phone with a Browser Wap 1.1 type application, without specific formatting parameter, the image is loaded from the identified URL address, image filtering is applied to optimize its quality, and the image is converted to the WBMP format. According to another example, when the request comes from a PC in which a size parameter has been specified, e.g. 200x150, the image is loaded from the identified URL address; it is set to scale 200x150 and converted to the JPEG format.

Once the image is transformed into the required format, the image is reconstituted and transmitted 600 to the user on the fly, i.e. instantaneously.

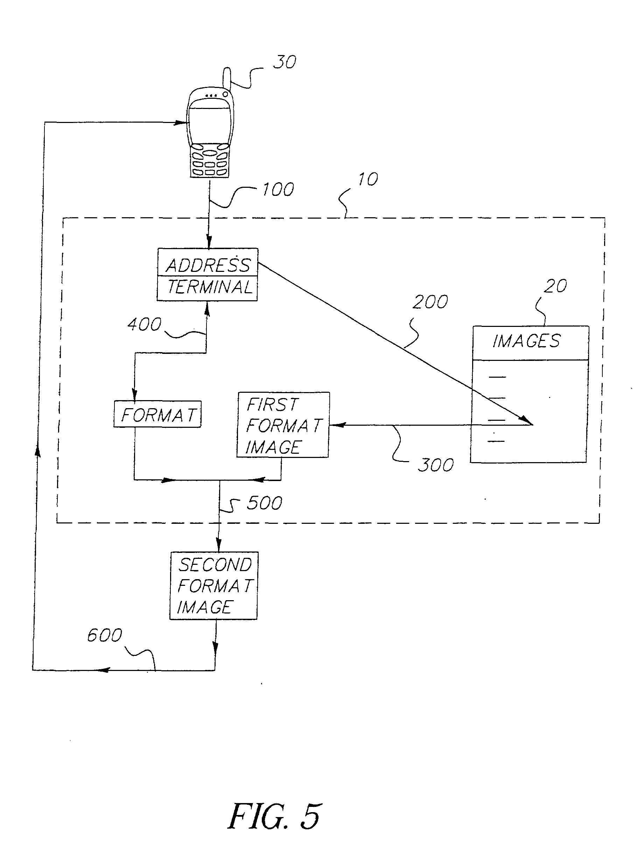

According to a particular embodiment of the invention represented in Figure 5, it is also planned to manage the storage of the site images in the unique format.

Thus, a customer will only have to supply the same service provider with all the images of its site, in a unique format, and the provider will make the transformations necessary to correctly reconstitute and transmit the images to the customer, as well as, if necessary, storing the images.

## Claims

1. A process to supply a WEB site designer or WEB site host type customer with a tool (10) for transforming an image from a first format into a second format to transform the images (20) present on their site and stored in a unique format, into a second format suited to the display screen of a site user's terminal (30), a process that comprises the following steps:
- from a request (100) coming from a user of the customer's site, in which the user requests to view, on his/her terminal, a page of the site in which is found at least one image, identifying (200) the address at which the customer has stored the image in the unique format;
- recovering (300) the image at the identified address;
- determining (400) the image format suited to the user's terminal on which the image is to be displayed;
- applying (500) a transformation to the recovered image so as to transform it into the set format;
- reconstituting (600) and transmitting the image, transformed into the set format, to the user.

2. A process according to Claim 1 that further comprises the step of managing a database (40) in which are associated different types of terminals with display screen and the image format(s) displayable on these screens, the image format suited to the terminal being determined from the database (40).

3. A process according to Claim 1 wherein a request (700) is transmitted to the user's terminal to request the terminal's display capacities, the image format suited to the terminal being determined according to the identified display capacities.

4. A process according to Claim 2 wherein a request (700) is transmitted to the user's terminal to request the terminal's display capacities, the image format suited to the terminal being further determined according to the identified display capacities.

5. A process according to any either of Claims 1 or 2 wherein the image format suited to the user's terminal on which the image is to be displayed is further determined according to the formatting parameters (50) of the image specified in the user's request (100).

6. A process according to any one of the previous claims that further comprises the step of storing all of the images present on the customer's site.
